# EUROPEAN PATENT APPLICATION

(11) **EP 4 537 673 A1**
(43) Date of publication of application: **16.04.2025**
(21) Application number: 24205776.8
(22) Date of filing: 10.10.2024
(51) Int. Cl.: A23K 10/30, A23K 50/10, A23K 50/15, A23K 20/163, A23K 40/20

(54) **METHOD AND SYSTEM FOR OBTAINING A PROTEIN CONTAINING COMPOSITION FOR RUMINANT FEED**

(30) Priority: 12.10.2023 NL 2036013
(71) Applicant: Grassa B.V., 5928 SZ Venlo (NL)
(72) Inventor: Koopmans, Sybrandus, 5928 SZ Venlo (NL)
(74) Representative: Arnold & Siedsma

(57) **Abstract**

The present invention relates to a method and system for obtaining a protein containing composition for ruminant feed. The method according to the invention comprises:
- providing a protein containing biomass material, preferably grass and/or alfalfa;
- reducing the biomass material to biomass pulp;
- compressing the biomass pulp to separate the biomass pulp in a juice fraction and a cake fraction having a water content that is above 50% by weight of the cake fraction, wherein the compressing is performed such that the temperature and pressure during compressing are increased to respectively a temperature of at least 70 °C, preferably at least 120 °C, and a pressure of at least 5 bar;
- maintaining the cake fraction at a temperature in the range 50 °C to 90 °C, preferably around 70 °C for a period of at least ten minutes; and
- removing the cake fraction.

## Description

The present invention relates to a method and system for obtaining a protein containing composition for ruminant feed.

It is known that the composition of the feed provided to ruminant animals is a factor that influences the amount of milk that is produced by said animals. It is known that, in practice, feed often comprises an amount of non resistant protein that exceeds the amount required for an optimal nitrogen use efficiency (NUE). In other words, the non resistant protein capacity exceeds the usable capacity. To improve the feed efficiency, several methods were developed to make protein more resistant by decreasing the solubility of the available protein to achieve an increase in the amount of milk produced. These methods include heating and/or the use of aldehydes, such as formaldehyde, alcohol or bentonites and also include the Maillard reactions taking place while making protein more resistant.

Although influencing the Maillard reactions in theory appears to be very effective, it has however been proven difficult to develop a method and system to efficiently and effectively achieve that influence of the Maillard reactions. This is mainly due to the fact that a relatively high amount of energy is required to exert such influence, especially with biomass sources having a relatively high moisture content (i.e. a moisture content of 45% or higher).

Therefore, an improved method and system for obtaining a protein containing composition for ruminant feed are required.

This objective is achieved with a method for obtaining a protein containing composition for ruminant feed, the method comprising:
- providing a protein containing biomass material, preferably grass or alfalfa;
- reducing the biomass material to biomass pulp;
- compressing the biomass pulp to separate the biomass pulp in a juice fraction and a cake fraction having a water content that is above 50% by weight of the cake fraction, wherein the compressing is performed such that the temperature and pressure during compressing are increased to respectively a temperature of at least 70 °C and a pressure of at least 5 bar;
- maintaining the cake fraction at a temperature in the range 50 °C to 90 °C, preferably around 70 °C for a period of at least ten minutes; and
- removing the cake fraction.

An advantage of the method according to the invention is that the compression step not only results in the separation of the juice fraction, but also results in an increase in temperature of and pressure on the biomass pulp. This means that that the required energy for making the protein more resistant is already provided by the compression step and no additional energy is required. In addition, the intermediate product (i.e. the juice fraction) is a separate product that can be sold. It is noted that in most cases, the increase in temperature will only occur after a predetermined amount of juice (or juice fraction) has been extracted from the biomass pulp. This may for example be when the biomass pulp attains 25% dry matter. As a result, the temperature of the extracted juice will not be significantly influenced during the extraction.

A further advantage is that the method according to the invention obviates the need for addition of water, since the water needed is already contained in the biomass pulp itself. This further reduces the cost of operation of the method according to the invention.

An even further advantage is that the method according to the invention increases the amount of protein (that ultimately resides) in the cake fraction with 50%. The increase is measured as an increase of Aufrère from 40 to 70.

An even further advantage is that the method according to the invention can be applied with a wide range of biomass, including grass-type biomass, which obviates the use of less environmentally friendly feed components such as soy. This is achieved by virtue of the fact that a protein concentrate can be made from the juice which replaces soy.

It is noted that the increase in temperature and pressure takes place during the compression step and is generally initiated after the juice fraction has been substantially completely extracted from the biomass pulp. This also makes it possible to produce protein from the juice fraction.

It has been found that a temperature near the upper limit of the temperature range (i.e. 90 °C), generally results in a higher resistance, whereas a temperature near the lower limit of the temperature range (i.e. 50 °C) leads to a lower energy use.

In an embodiment of the method according to the invention, the step of compressing may include mechanically compressing the biomass pulp, preferably using a screw type press and more preferably comprising a double screw type press.

An advantage or mechanical compression, especially using a screw-type press, is that it generates heat and pressure during compression of the biomass pulp.

A further advantage of mechanical compression, especially using a screw-type press, is that the amount of heat and pressure generated during compression can be controlled by controlling a rotation speed of the mechanical press and/or by controlling a throttle valve that is configured to control an output of the compression device, wherein the throttle valve preferably is positioned at the exit of the device. This is possible due to the fact that higher rotation speeds lead to higher temperatures and/or pressures (and vice versa).

In an embodiment of the method according to the invention, the method may further comprise the step of, during compressing, adding an amount an alkalioxide to the biomass pulp, wherein the alkalioxide is selected from the group of calciumoxide (CaO), calciumhydroxide (Ca(OH)₂), potassiumhydroxide (KOH), sodiumhydroxide (NaOH), magnesiumoxide (MgO), disodiumcarbonate (Na₂CO₃), dipotassiumcarbonate (K₂CO₃) or potassiumbicarbonate (KHCO₃), and wherein the alkalioxide more preferably is calciumoxide (CaO).

An advantage of alkalioxides is that they increase the pH in the biomass pulp during compressing thereof. It has been found that a relatively high pH provides a positive effect on the resistance of the protein in the cake fraction during the formation thereof. In particular, it has been found that it promotes the Maillard reaction during formation of the cake fraction. It is preferred that the pH is in the range of 8 to 12, more preferably in the range of 9 to 10.

It has been found that calciumoxide in particular is advantageous, because it can, aside of increasing the pH, bind to the protein, therewith providing an increased degree of protein resistance in the cake fraction. This in turn provides an even higher rumen bypass of the protein by the ruminant animal. An additional advantage of calciumoxide is that is easily suspendable in water (to form so-called 'Ca-milk'), which allows it to be easily provided to the cake fraction during compressing.

In an embodiment of the method according to the invention, the amount of alkalioxide may be in the range of 0.1% to 5.0% per kilogram of dry weight of the biomass pulp.

It has been found that the abovementioned quantities increase the degree of resistance while simultaneously having a positive influence on maintaining the pH in a desired range. Beyond and especially above the abovementioned range, a negative effect may occur on the pH of the biomass pulp, depending on the specific circumstances, which is substantially prevented by alkalioxides in the abovementioned ranges.

Said pH may be measured using a sensor which is configured for continuously measuring the pH at various stages in the method for obtaining a protein containing composition for ruminant feed. Alternatively, the pH may be measured by taking samples during the method for obtaining a protein containing composition for ruminant feed.

In an embodiment of the method according to the invention, the alkalioxide is injected into the biomass pulp during the compression step.

An advantage of injecting the alkalioxide into the biomass pulp is that it allows a rapid dispersion into and reaction with the biomass pulp, which increases the effectiveness of the alkalioxide in the biomass pulp.

A further advantage is that the injection can be controlled with a high amount of precision, thus allowing an increased control over the consolidation during the compression step.

In an embodiment of the method according to the invention, the alkalioxide may, upon adding, have a temperature in the range of 30 °C to 200 °C, preferably in the range of 70 °C to 100 °C.

An advantage of providing the alkalioxide with an increased temperature is that it does not result in a temperature decrease of the biomass pulp during the compression step. As a result, the chemical reactions of the alkalioxide and/or other added substances is not negatively affected by the supply of the alkalioxide.

Another advantage is that the reactivity of the alkalioxide at the elevated temperature mentioned above is increased, leading to an increased reaction speed with the biomass pulp.

In an embodiment of the method according to the invention, the method may further comprise the step of adding an amount of nitrate to the cake fraction, wherein the nitrate preferably is chosen from a group of sodium nitrate (Na₂NO₃), potassium nitrate (K₂NO₃), calcium nitrate (CaNO₃), ammonium nitrate (NH₄NO₃), magnesium nitrate (Mg(NO₃)₂).

It is known that, in ruminant animals such as cows, bacteria in the rumen are capable of converting nitrate into bacterial protein that subsequently can be converted to milk protein in a later stage. The present method allows making protein resistant from soluble protein, which allows it to be processed by the ruminant. In some cases, making the protein resistant results in an amount of resistant protein that exceeds the resistant protein need for the ruminant, thus reducing the conversion into milk protein below an optimal position (known as zero on the protein consolidation balance). An advantage of supplying nitrate to the cake fraction is that, in the case of a negative resistant protein balance, the resistant protein balance can be shifted towards zero using nitrate, thus leading to optimal use of the available consolidated protein in the feed. This in turn results in an optimal milk (protein) production.

A further advantage is that the addition of nitrate also reduces the amount of methane produced and excreted by the ruminant, thus leading to decrease in greenhouse gases.

In an embodiment of the method according to the invention, the method may further comprise the step of, during compressing, adding an amount of sugar to the biomass pulp.

An advantage of providing sugar to the biomass pulp is that it provides a positive effect on the Maillard reaction, which in turn increases rumen resistance of protein contained in the biomass pulp. Another advantage of sugar is that it is (highly) reactive, which increases the effectiveness of the rumen resistance during the compression step.

In an embodiment of the method according to the invention, the amount of sugar may be in the range of 0.5% to 5.0% per kilogram of dry weight of the biomass pulp, preferably in the range of 1.0% to 3.0% per kilogram of dry weight of the biomass pulp, more preferably about 2.0% per kilogram of dry weight of the biomass pulp.

It has been found that the abovementioned ranges of sugar provide an effective and efficient rumen resistance. The dry weight of the biomass pulp may during the process for example be determined by sampling the biomass pulp or may be determined by virtue of a calculation based on the type of biomass in combination with the settings (of the system) during the compression step.

In an embodiment of the method according to the invention, the sugar may be a reducing sugar, and preferably may be one of xylose, fructose, galactose, glucose, glyceraldehyde, ribose, cellobiose, lactose, maltose, and more preferably may be xylose.

An advantage of the abovementioned sugars is that they have an even higher reactivity than other sugars, therewith leading to an even further increased effectiveness of the sugar in improving the Maillard reaction during the production of resistant protein. The reactivity of the abovementioned sugars may in some cases even be higher than the reactivity of (some of) the sugars that are already present in the biomass itself.

In an embodiment of the method according to the invention, the sugar is injected into the biomass pulp during the compression step, wherein the sugar preferably is dissolved in a liquid, such as water.

An advantage of injecting the sugar into the biomass pulp is that it allows a rapid dispersion into and reaction with the biomass pulp, which increases the effectiveness of the reaction of the sugar with the biomass pulp.

A further advantage is that the injection can be controlled with a high amount of precision, thus allowing an increased control over the consolidation during the compression step.

The invention further relates to a system for manufacturing a protein containing composition for ruminant feed, the system comprising:
- a supply of biomass material;
- a pressing apparatus having an inner space that is configured to receive and compress biomass material, wherein the pressing apparatus, when viewed in a feed direction, comprises:
   ~ a refining part configured for reducing the biomass material to biomass pulp; and
   ~ a compression part that is configured to compress the biomass pulp.

The system according to the invention provides similar effects and advantages as the method according to the invention. The embodiments described for the method according to the invention can be freely used and/or combined in the system according to the invention.

In particular, an advantage of the system according to the invention is that it is compact and has a relatively low footprint.

Another advantage is that the system, due to the compactness also has a relatively low energy use.

Another advantage of the system according to the invention is that it simultaneously allows the production of biomass juice (i.e. a juice fraction) that can be made into a protein concentrate as well as the production of ruminant feed (i.e. a cake fraction). The system according to the invention therefore has a high efficiency. In an embodiment of the system according to the invention, the system may further comprise a reduction apparatus, preferably a refiner, that is operatively connected to the supply and that is configured to reduce the biomass material to biomass pulp.

An advantage of providing an additional reduction apparatus is that the size of the biomass may be reduced in size before entering into the compression apparatus. This allows the size of the biomass to be reduced even further in the compression apparatus, thus increasing the efficiency of the separation of the juice fraction and the cake fraction even further.

In an embodiment of the system according to the invention, an insulated container that is operatively connected to an outlet of the pressing apparatus and that is configured to store a cake fraction from the pressing apparatus for a predetermined time at a predetermined temperature.

An advantage of providing an insulated container is that the processing capacity of the system is increased. This is mainly due to the fact that a part of the biomass pulp can be maintained for the predetermined time in the insulated container rather than in the pressing apparatus itself. This also allows the protein contained in the biomass pulp after removal of the juice fraction, which is about 30% - 70% of total protein in the biomass, to be processed.

In an embodiment of the system according to the invention, the insulated container may be a tubular container or tube that is configured for holding and transporting the biomass pulp.

An advantage of providing a tubular container or a tube is that the biomass pulp can be transported through the container. The dimensions and conditions can be chosen/selected such that the transport occurs in a predetermined, known time frame that matches the required time for maintaining the cake fraction at a predetermined temperature.

Another advantage is that a tubular container or tube provides a high volume relative to its circumference, which reduces costs for insulation.

In an embodiment of the system according to the invention, the insulated tubular container or tube has a length in the range of 0.1 to 10 meter, preferably in the range of 0.1 to 8 meter and more preferably in the range of 1 to 8 meter.

An advantage of the abovementioned lengths is that a sufficiently long residence time for the biomass pulp can be achieved at the predetermined temperature.

In an embodiment of the system according to the invention, the pressing apparatus may be a mechanical, preferably a screw-type, pressing apparatus and/or wherein the reduction apparatus is a mechanical reduction apparatus, such as a refiner, a cutting apparatus or a grinder.

An advantage of a mechanical pressing apparatus is that the compression generates heat and pressure during compression of the biomass pulp. This substantially obviates the need to supply additional energy and thus increases the efficiency of the system. This is in particular true for a screw-type pressing apparatus with a single or double screw, because these provide a high amount of shear forces to the biomass. These shear forces pull the biomass apart during transportation, allowing the juice fraction to be extracted more easily. Due to the fact that the biomass is pulled apart, the surface area of the biomass is increased. This increases the effectivity of making the protein more resistant.

A further advantage of a mechanical pressing apparatus, especially using a (double) screw-type pressing apparatus, is that the amount of heat and pressure generated during compression can be controlled be controlling a rotation speed and/or throttling of the mechanical press. This is possible due to the fact that higher rotation speeds lead to higher temperatures and/or pressures (and vice versa).

The reduction apparatus preferably also is a mechanical apparatus, because it allows an efficient manner of reducing the size of the biomass to a size suitable for the pressing apparatus. Another advantage is that, similar to the pressing apparatus, a mechanical reduction apparatus produces heat during the reduction (i.e. cutting or grinding). This provides a (small) increase the temperature of the biomass pulp which in turn reduces the amount of heat that needs to be generated by the pressing apparatus to raise the temperature of the biomass pulp.

In an embodiment of the system according to the invention, a rotation speed of the pressing apparatus is in the range of 0.5 Hz to 20 Hz, more preferably in the range of 1 Hz to 15 Hz, and most preferably in the range of 1 Hz to 10 Hz.

An advantage of a controllable screw-type pressing apparatus, especially in the abovementioned rotation speed ranges, is that the temperature and/or pressure can be controlled with a high precision. An increased rotation speed results in an increase in the temperature and/or pressure, whereas a decrease in rotation speed has the opposite result. As a result, an effective control system is affected.

In an embodiment of the system according to the invention, the system may further comprise a throttle or valve that preferably is positioned near an exit of the pressing apparatus and that is switchable between an open state, in which biomass pulp can be discharged from the pressing apparatus and a closed state in which the biomass pulp is substantially kept in the pressing apparatus.

An advantage of the throttle or valve is that the temperature and/or pressure can be controlled with a high precision by controlling the discharge of biomass pulp from the pressing apparatus. It is noted that the open state may also comprise a range of open states, in which each open state defines a different cross-section of the opening.

In an embodiment of the system according to the invention, the system may further comprise a alkalioxide supply apparatus that is configured to provide, preferably inject, alkalioxide, preferably calciumoxide suspended in water, to the pressing apparatus. In addition or alternatively, the system may comprise a sugar supply apparatus that is configured to provide, preferably inject, sugar, preferably a reducing sugar, to the pressing apparatus.

An advantage of supplying alkalioxides, in particular calciumoxide, is that they increase the pH in the biomass pulp during compressing thereof. It has been found that a relatively high pH provides a positive effect on the consolidation of the protein in the cake fraction during the formation thereof. It has been found that calciumoxide in particular is advantageous, because it can, aside of increasing the pH, bind to the protein, therewith providing an increased resistance on said protein in the cake fraction. This in turn provides an even higher rumen bypass of the protein by the ruminant animal. An additional advantage of calciumoxide is that is easily suspendable in water, which allows it to be easily provided to the cake fraction during compressing. The high suspendability in water (leading to the formation of so-called "Calcium-milk") also makes it very suitable for injection into the pressing apparatus.

An advantage of injecting the alkalioxide into the biomass pulp is that it allows a rapid dispersion into and reaction with the biomass pulp, which increases the effectiveness of the alkalioxide in the biomass pulp.

An advantage of providing sugar to the biomass pulp is that is increases resistance of protein contained in the biomass pulp. Another advantage of sugar is that it is (highly) reactive, which increases the effectiveness of the step of making the protein more resistant during the compression step.

For both options, injection is preferred to supply the substance. An advantage of injection is that it can be applied in a highly precise manner in terms of the amount of substance added. In addition, injection also results in a precise supply in terms of dispersion and supply position relative to the biomass pulp. This increases the effectiveness of the substance supplied to the biomass pulp.

In an elaboration, the supply apparatus may contain injection nozzles or injectors, which may optionally be tiltable to provide a localized supply of said substances.

In an embodiment of the system according to the invention, the pressing apparatus may further comprise an alkalioxide inlet, preferably an injector, nozzle or atomizer, that is configured to, during operation, inject alkalioxide in the inner space. Additionally or alternatively, the system may also comprise a sugar supply inlet, preferably an injector, that is configured to, during operation, inject sugar in the inner space.

An advantage of injection using a nozzle or atomizer is that it can be applied in a highly precise manner in terms of the amount of substance added. In addition, the use of nozzles or atomizers also results in a precise supply in terms of dispersion and supply position relative to the biomass pulp. This increases the effectiveness of the substance supplied to the biomass pulp.

In an elaboration, the supply apparatus may contain injection nozzles or injectors, which may optionally be tiltable to provide a localized supply of said substances.

In an embodiment of the system according to the invention, the alkalioxide inlet and the sugar supply inlet are, when viewed along a longitudinal axis of the pressing apparatus, positioned at substantially the same longitudinal location, and preferably are, when viewed in a direction substantially perpendicular to the longitudinal direction, positioned at opposite sides of the pressing apparatus.

An advantage of positioning the alkalioxide inlet and the sugar supply inlet at substantially the same longitudinal location increases the reactivity in the biomass pulp, because both substances add to the process of making the protein more resistant.

A further advantage is achieved by positioning both inlets an opposite sides of the pressing apparatus and/or the inner space thereof. This allows both substances to penetrate into the biomass and simultaneously affect the biomass pulp therein.

In an embodiment of the system according to the invention, the system may further comprise a nitrate supply unit that is operatively connected to the inner space of the pressing apparatus or to the insulation container and that is configured to supply a predetermined amount of nitrate to said inner space of insulation container.

It is known that, in ruminant animals such as cows, bacteria in the rumen are capable of converting nitrate into bacterial protein that subsequently can be converted to milk protein in a later stage. The present system allows making soluble protein resistant, which allows these proteins to bypass the rumen of the ruminant. Making the soluble protein resistant may, in some cases, result in an amount of resistant protein that exceeds the unresistant/resistant protein balance. This reduces the conversion into milk protein below an optimal position (known as less than zero on the unresistant/resistant protein balance). An advantage of supplying nitrate to the cake fraction is that, in the case of a negative unresistant/resistant protein balance, the unresistant/resistant protein balance can be shifted towards zero, thus leading to optimal use of the contained nitrogen in the feed. This in turn results in an optimal milk (protein) production.

It is noted that unresistant/resistant protein balance may also refer to rumen degradable protein in this application.

A further advantage is that the addition of nitrate also reduces the amount of methane produced in the rumen and excreted by the ruminant, thus leading to decrease in greenhouse gases.

An advantage of providing the nitrate to the insulation container is that it is supplied at a position in which the amount of consolidated protein is relatively high and the nitrate is most effective for the process.

In an embodiment of the system according to the invention, the nitrate supply unit may further comprise a heating unit or heating element, for example an electric heating element, that is configured to supply heat to the biomass pulp.

In an embodiment of the system according to the invention, the system may further comprise a control unit that is configured to, during operation, control one or more of:
- an amount of alkalioxide supplied to the inner space;
- an amount of sugar supplied to the inner space; and/or
- an amount of nitrate supplied to the inner space or the insulation container.

An advantage of providing a control unit is that the supply of the various substances can be monitored and controlled. Moreover, it allows for an integrated control in which the supply of the various substances are aligned which each other to maximum effect on the chemical reactions taking place in the system.

A further advantage of the control unit is that it allows for monitoring of the reaction process by matching the supplied amount of substances to the quality of the cake fraction that is manufactured with the system.

It is noted that the throttle valve, if present, may also be used as a control unit to control one or more of the abovementioned aspects.

In an embodiment of the system according to the invention, the control unit is further configured to supply the amount of sugar and/or the amount of alkalioxide at a predetermined time during compression, wherein the predetermined time preferably comprises a point in time at which the temperature of the biomass pulp increases.

It has been found that the supply of sugar and/or alkalioxides is most effective at an elevated temperature. An advantage of the control unit is that it can be configured to supply these substances at a predetermined temperature that will render the substances most effective. This is in particular at a time point at which the temperature rises or is at an elevated level.

In an embodiment of the system according to the invention, the pressing apparatus further comprises at least one temperature sensor, wherein the control unit is configured to, based on temperature data by the at least one temperature sensor, control the supply the amount of sugar and/or the amount of alkalioxide added to the biomass pulp, and preferably wherein the supply is provided at a predetermined time during compression at which the temperature data indicate a temperature increase of the biomass pulp. More preferably, the temperature increase is more than 5 °C, more preferably more than 10 °C. Most preferably, the temperature increase is up to or above the reaction temperature at which the Maillard reaction takes place.

An advantage of providing one or more temperature sensors is that the control unit can even more precisely determine the time point at which the supply of the alkalioxide and/or the sugar is most effective.

The invention also relates to a protein containing composition obtainable by the method according to the invention.

The protein containing composition according to the invention provides similar effects and advantages as the method and the system according to the invention. Embodiments described in relation to the method and system according to the invention can freely be combined with the protein containing composition according to the invention.

The invention also relates to the use of protein containing composition according to the invention.

The use of the protein containing composition according to the invention provides similar effects and advantages as the method, the system and the protein containing composition according to the invention. Embodiments described in relation to the method, the system and the protein containing composition according to the invention can freely be combined with the use of the protein containing composition according to the invention.

The invention further also relates to the use of the protein containing composition according to the invention for feeding ruminant animals, preferably feeding cows.

The use of the protein containing composition according to the invention for feeding ruminant animals provides similar effects and advantages as the method and the system according to the invention. Embodiments described in relation to the method, the system and the protein containing composition according to the invention can freely be combined with use the for ruminant animals according to the invention.

The invention further also relates to a mobile unit comprising a system according to the invention.

The mobile unit according to the invention provides similar effects and advantages as the method, the system, the protein containing composition and the use according to the invention. Embodiments described in relation to the method, the system, the protein containing composition and the use according to the invention can freely be combined with the mobile unit according to the invention.

In particular, it has been found that the mobile unit according to the invention, due to the heat and pressure generated during the compression to separate the pulp, provides a compact, efficient and easily transportable unit to manufacture a cake fraction of the biomass pulp. This allows biomass, especially grass and similar biomass, to efficiently be processed on-site to intermediate or end products ready for use. As a result, the transport costs of the biomass are reduced and the processing efficiency is increased.

Another advantage is that the cake fraction can be produced and even stored and/or ensiled locally for later use. This reduces transport movements even further.

Further advantages, features and details of the invention are elucidated on the basis of preferred embodiments thereof, wherein reference is made to the accompanying drawings, in which:

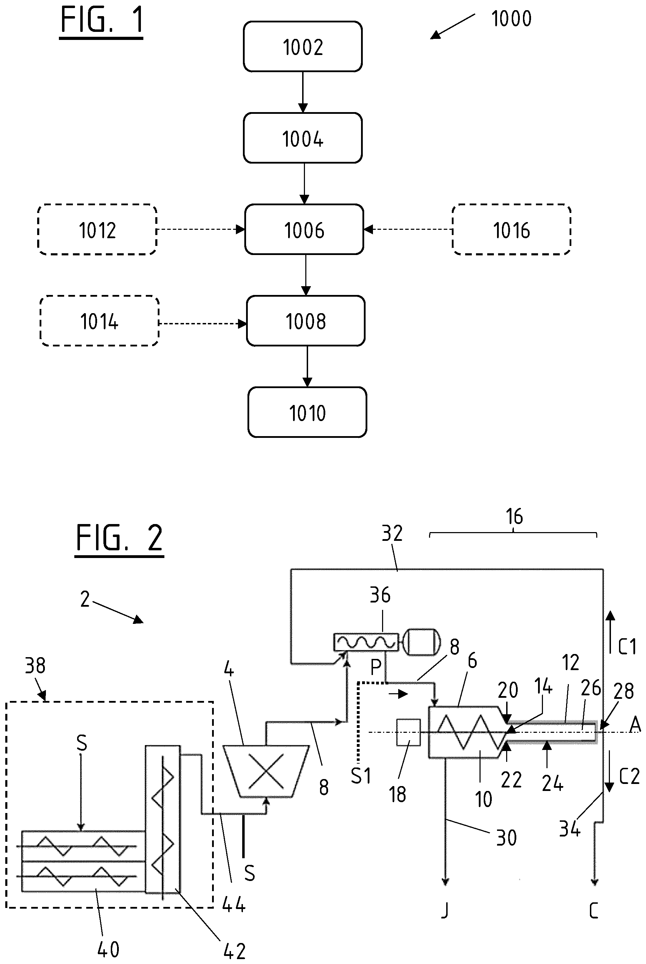

- Figure 1 shows a schematic view of an example of a method according to the invention; and
- Figure 2 shows a schematic view of an example of a system according to the invention.

In an example of method 1000 according to the invention, method 1000 comprises providing 1002 a protein containing biomass material, preferably grass. A subsequent step comprises reducing 1004 the biomass material to biomass pulp, which can be compressed in a compressing step. The compressing step comprises compressing 1006 the biomass pulp to separate the biomass pulp in a juice fraction J and a cake fraction C, with the cake fraction C having a water content that is above 50% by weight of the cake fraction. The compressing is performed such that the temperature and pressure during compressing are increased to respectively a temperature of at least 70 °C and a pressure of at least 10 bar. Method 1000 further comprises the step of maintaining 1008 the cake fraction at a temperature in the range 50 °C to 90 °C, preferably around 70 °C, and most preferably around 120 °C, for a period of at least ten minutes, and the step of removing 1010 the cake fraction. It is noted that the temperature may also be a higher temperature.

Optionally, method 1000 may further comprise the step of, during compressing, adding 1012 an amount of an alkalioxide to the biomass pulp. The alkalioxide is in this example chosen from the group of calciumoxide (CaO), calciumhydroxide (CaOH), potassiumhydroxide (KOH), sodiumhydroxide (NaOH), magnesiumoxide (MgO), disodiumcarbonate (Na₂CO₃), dipotassiumcarbonate (K₂CO₃) or potassiumbicarbonate (KHCO₃). Preferably, the alkalioxide is calciumoxide (CaO).

Method 1000 also includes the optional step of adding 1014 an amount of nitrate to the cake fraction, which in this example is performed during the step of maintaining 1008. Another optional step of method 1000 is the step of, during compressing, adding 1016 an amount of sugar to the biomass pulp.

In an example of system 2 according to the invention, system 2 comprises biomass supply S. In this example, biomass supply S is provided to optional reduction apparatus 4, which is grinder 4 that reduces or refines the size of the biomass supply S to biomass pulp P. Reduction apparatus 4 is operatively connected to pressing apparatus 6, which connection in this example is made by means of optional conduit 8. It is however also possible to directly feed the biomass S to pressing apparatus 6, for example at S1. Pressing apparatus 6, which in this example is a single screw pressing apparatus 6, is provided with inner space 10 that is configured to receive biomass S and compress biomass S to biomass pulp P. IN case optional grinder 4 is used, pressing apparatus 6 even further compresses biomass pulp P. In this example, pressing apparatus 6 is driven by motor 18, which for example may be electric motor 18. Pressing apparatus 6 further comprises juice outlet 30 from which juice fraction J, that is obtained by the compression in pressing apparatus 6, is discharged. This may either be for further processing or for use or sale as separate product.

System 2 further comprises insulated container 12 that in this example is connected directly to outlet 14 of pressing apparatus 6. In fact, in this particular example, pressing apparatus 6 and insulated container 12 form single processing assembly 16. Insulated container 12 in this example is insulated tubular container 12, which is configured to store a cake fraction from the pressing apparatus for a predetermined time at a predetermined temperature. The predetermined temperature in this example is about 70 °C, and preferably even higher.

Pressing apparatus 6 is in this example further provided with alkalioxide inlet 20 and sugar inlet 22, both of which are positioned near outlet 14 of pressing apparatus 6. In this example, alkalioxide inlet 20 is positioned across from or opposite of sugar inlet 22, and both are positioned at the same position when viewed along longitudinal axis A of pressing apparatus 6. Also shown in this example is nitrate inlet 24, which is positioned in insulated container 12 and emanates in inner space 26 thereof to allow supply, for example injection, of a nitrate containing compound or substance into insulated container 12. Insulated container 12 further comprises outlet 28 to discharge cake fraction C from assembly 16.

In this example, part C1 of cake fraction C can be recirculated in optional recirculation conduit 32 to reduction apparatus 4 for reprocessing, whereas the other, preferably major, part C2 of cake fraction C is discharged from system 2 as product C using conduit 34. It is however also possible to completely discharge cake fraction C from conduit 34 (hence part C2 is complete cake fraction C).

It is noted that in this example, system 2 also comprises optional pump 36 that is positioned in optional conduit 8 between optional grinder 4 and pressing apparatus 6. In this example, optional pump 36 is worm gear pump 36 in which optional recirculation conduit 32 also emanates.

Further optionally, system 2 in this example also contains optional pre-processing assembly 38 that is configured for pre-processing or supplying biomass to optional reduction apparatus 4. Pre-processing assembly 38 in this example comprises supply S that is provided to double-feedscrew 40 and single transport screw 42, the latter of which is connected to inlet 44 of grinder 4. Pre-processing assembly 38 in most cases is mainly used for reducing (very) large biomass and/or for transportation of biomass within a processing facility to grinder 4 of system 2.

Multiple experiments have been performed to determine the Aufrère of multiple biomass samples. Said samples are based on grass.

It is noted that CF refers to cake fraction, DM refers to dry matter, and entries 1, 6, 11, and 16 refer to a control sample.

The experiments disclosed below show that the method for obtaining a protein containing composition for ruminant feed according to the invention provides said protein containing composition in an efficient and effective manner.

The cake fraction disclosed in Table 1 originates from fresh grass. Furthermore, different parameters are used.

**Table 1: conditions of experiments using the method according to the invention**

| Entry | CF (g, 30% DM) | Xylose (% of CF) | NaOH (% of CF) | Temperature (°C) | Time (hour) | Aufrère (%) |
|---|---|---|---|---|---|---|
| 1 | 200 | 0 | 0 | 0 | 0 | 48.3 |
| 2 | 200 | 1 | 0.3 | 70 | 1 | 40.8 |
| 3 | 200 | 2 | 0.5 | 70 | 24 | 71.2 |
| 4 | 200 | 1 | 0.3 | 120 | 1 | 56.5 |
| 5 | 200 | 2 | 0.5 | 120 | 2 | 62.8 |

**Table 2: results of the experiments according to Table 1**

| | | | | | |
|---|---|---|---|---|---|
| Entry | 1 | 2 | 3 | 4 | 5 |
| DM | 304 | 263 | 271 | 269 | 274 |
| RE | 44 | 53 | 54 | 54 | 55 |
| RE on DM (%) | 14.5 | 20.2 | 19.9 | 20.1 | 20.1 |
| Aufrère (%) | 48.3 | 40.8 | 71.2 | 56.5 | 62.8 |

It was found (Table 1 and Table 2) that the method according to the invention provides an Aufrère percentage of at least 40%. Thus, the method according to the invention provides a protein containing composition for ruminant feed efficiently and effectively.

The cake fraction disclosed in Table 3 originates from silage. Furthermore, the method according to the invention includes the addition of CaO.

**Table 3: conditions of experiments using the method according to the invention**

| Entry | CF (g, 30% DM) | Xylose (% of CF) | NaOH (% of CF) | CaO (% of CF) | Temperature (°C) | Time (hour) | Aufrère (%) |
|---|---|---|---|---|---|---|---|
| 6 | 100 | 0 | 0 | 0 | 70 | 24 | 57.6 |
| 7 | 100 | 2 | 0.5 | 0 | 70 | 24 | 68.6 |
| 8 | 100 | 2 | 0 | 0.5 | 70 | 24 | 71.6 |
| 9 | 100 | 2 | 0.5 | 0.5 | 70 | 24 | 70.8 |
| 10 | 100 | 2 | 0.25 | 0.25 | 70 | 24 | 71.1 |

**Table 4: results of the experiments according to Table 3**

| | | | | | |
|---|---|---|---|---|---|
| Entry | 6 | 7 | 8 | 9 | 10 |
| DM | 363 | 312 | 306 | 308 | 272 |
| RE | 38 | 31 | 30 | 31 | 27 |
| RE on DM (%) | 10.5 | 9.9 | 9.8 | 10.1 | 9.9 |
| pH | 3.9 | 4.52 | 5.41 | 5.56 | 5.12 |
| Aufrère (%) | 57.6 | 68.6 | 71.6 | 70.8 | 71.1 |

It was found (Table 3 and Table 4) that the method according to the invention provides an Aufrère percentage of at least 60%. Thus, the method according to the invention provides a protein containing composition for ruminant feed efficiently and effectively.

The cake fraction disclosed in Table 5 originates from silage. Furthermore, differences in time and concentration of CaO has been tested.

**Table 5: conditions of experiments using the method according to the invention**

| Entry | CF (g, 30% DM) | Xylose (% of CF) | NaOH (% of CF) | CaO (% of CF) | Temperature (°C) | Time (hour) | Aufrère (%) |
|---|---|---|---|---|---|---|---|
| 11 | 100 | 0 | 0 | 0 | 70 | 0 | 38.7 |
| 12 | 100 | 2 | 0 | 0 | 70 | 1 | 44.2 |
| 13 | 100 | 2 | 0 | 0.5 | 70 | 2 | 48.7 |
| 14 | 100 | 2 | 0 | 0.5 | 70 | 6 | 62.7 |
| 15 | 100 | 2 | 0 | 0.25 | 70 | 12 | 67.7 |

**Table 6: results of the experiments according to Table 5**

| | | | | | |
|---|---|---|---|---|---|
| Entry | 11 | 12 | 13 | 14 | 15 |
| DM | 340 | 293 | 290 | 285 | 287 |
| RE | 35 | 27 | 28 | 28 | 27 |
| RE on DM (%) | 10.3 | 9.2 | 9.7 | 9.8 | 9.4 |
| pH | 4 | 5.09 | 5.09 | 4.84 | 4.76 |
| Aufrère (%) | 38.7 | 44.2 | 48.7 | 62.7 | 67.7 |

It was found (Table 5 and Table 6) that the method according to the invention provides an Aufrère percentage of at least 40%. Furthermore, it was found that addition of CaO and a time of at least 6 hours provides an Aufrère percentage of at least 60%. Thus, the method according to the invention provides a protein containing composition for ruminant feed efficiently and effectively.

The cake fraction disclosed in Table 7 originates from fresh grass. Furthermore, LAB refers to lactic acid bacteria, which is added when a silage is formed.

**Table 7: conditions of experiments using the method according to the invention**

| Entry | CF (g, 30% DM) | Xylose (% of CF) | LAB addition | CaO (% of CF) | Temperature (°C) | Time (hour) | Aufrère (%) |
|---|---|---|---|---|---|---|---|
| 16 | 100 | 0 | 0 | 0 | 20 | 0 | 25.8 |
| 17 | 100 | 0 | 0 | 0 | 20 | 0 | 28.4 |
| 18 | 100 | 2 | 0 | 0.5 | 70 | 12 | 48.4 |
| 19 | 100 | 2 | LAB | 0.5 | 70 | 12 | 47.2 |

**Table 8: results of the experiments according to Table 7**

| | | | | |
|---|---|---|---|---|
| Entry | 16 | 17 | 18 | 19 |
| DM | 215 | 335 | 323 | 320 |
| RE | 50 | 69 | 66 | 65 |
| RE on DM (%) | 23.3 | 20.6 | 20.4 | 20.3 |
| pH | 6.41 | 6.17 | 6.18 | 4.14 |
| Aufrère (%) | 25.8 | 28.4 | 48.4 | 47.2 |

It was found (Table 7 and Table 8) that the method according to the invention provides an Aufrère percentage of at least 40% when CaO is added. Thus, the method according to the invention provides a protein containing composition for ruminant feed efficiently and effectively.

In a further experiment, the protein containing composition for ruminant feed was tested using NEN-EN-ISO 8968-1 or EG Nr. 152/2009, annex III, method C. It was found that the method according to the invention provided a protein containing composition for ruminant feed with 65 g proteins per kg composition, and an Aufrère percentage of 50.9%.

The present invention is by no means limited to the above described preferred embodiments and/or experiments thereof. The rights sought are defined by the following claims within the scope of which many modifications can be envisaged.

## Claims

1. Method for obtaining a protein containing composition for ruminant feed, the method comprising:
- providing a protein containing biomass material, preferably grass and/or alfalfa;
- reducing the biomass material to biomass pulp;
- compressing the biomass pulp to separate the biomass pulp in a juice fraction and a cake fraction having a water content that is above 50% by weight of the cake fraction, wherein the compressing is performed such that the temperature and pressure during compressing are increased to respectively a temperature of at least 70 °C, preferably at least 120 °C, and a pressure of at least 5 bar;
- maintaining the cake fraction at a temperature in the range 50 °C to 90 °C, preferably around 70 °C for a period of at least ten minutes; and
- removing the cake fraction.

2. Method according to claim 1, wherein the step of compressing includes mechanically compressing the biomass pulp, preferably using a screw type press and more preferably comprising a double screw type press.

3. Method according to claim 1 or 2, further comprising the step of, during compressing, adding an amount of an alkalioxide to the biomass pulp, wherein the alkalioxide is selected from the group of calciumoxide (CaO), calciumhydroxide (CaOH), potassiumhydroxide (KOH), sodiumhydroxide (NaOH), magnesiumoxide (MgO), disodiumcarbonate (Na₂CO₃), dipotassiumcarbonate (K₂CO₃) or potassiumbicarbonate (KHCO₃), and wherein the alkalioxide more preferably is calciumoxide (CaO), preferably wherein the amount is in the range of 0.1% to 5.0% per kilogram of dry weight of the biomass pulp, and/or wherein the alkalioxide has, upon adding, a temperature in the range of in the range of 30 °C to 200 °C, preferably in the range 70 °C to 100 °C.

4. Method according to any one of the preceding claims, further comprising the step of adding an amount of nitrate to the cake fraction, wherein the nitrate preferably is chosen from a group of: sodium nitrate (Na₂NO₃), potassium nitrate (K₂NO₃), calcium nitrate (CaNO₃), ammonium nitrate (NH₄NO₃), magnesium nitrate (Mg(NO₃)₂).

5. Method according to any one of the preceding claims, further comprising the step of, during compressing, adding an amount of sugar to the biomass pulp, preferably wherein the amount of sugar is in the range of 0.5% to 5.0% per kilogram of dry weight of the biomass pulp, preferably in the range of 1.0% to 3.0% per kilogram of dry weight of the biomass pulp, more preferably about 2.0% per kilogram of dry weight of the biomass pulp.

6. Method according to claim 5, wherein the sugar is a reducing sugar, and preferably is one of xylose, fructose, galactose, glucose, glyceraldehyde, ribose, cellobiose, lactose, maltose, and more preferably is xylose.

7. System for manufacturing a protein containing composition for ruminant feed, the system comprising:
- a supply of biomass material;
- a pressing apparatus that having an inner space that is configured to receive and compress biomass material, wherein the pressing apparatus, when viewed in a feed direction, comprises:
~ a refining part configured for reducing the biomass material to biomass pulp; and
~ a compression part that is configured to compress the biomass pulp.

8. System according to claim 7, further comprising an insulated container that is operatively connected to an outlet of the pressing apparatus and that is configured to maintain a cake fraction from the pressing apparatus for a predetermined time at a predetermined temperature.

9. System according to claim 7 or 8, wherein the pressing apparatus is a mechanical, preferably a screw-type, pressing apparatus and/or wherein the system further comprises a reduction apparatus which is a mechanical reduction apparatus, such as a refiner, a cutting apparatus or a grinder, preferably wherein a rotation speed of the pressing apparatus is in the range of 0.5 Hz to 20 Hz, more preferably in the range of 1 Hz to 15 Hz, and most preferably in the range of 1 Hz to 10 Hz.

10. System according to any one of the claims 7 to 9, further comprising:
- an alkalioxide supply apparatus that is configured to provide, preferably inject, alkalioxide, preferably calciumoxide dissolved in water, to the pressing apparatus; and/or
- a sugar supply apparatus that is configured to provide, preferably inject, sugar to the pressing apparatus.

11. System according to any one of the claims 7 to 10, wherein the pressing apparatus further comprises:
- an alkalioxide inlet, preferably an injector, nozzle or atomizer, that is configured to, during operation, inject alkalioxide in the inner space; and/or
- a sugar supply inlet, preferably an injector, that is configured to, during operation, inject sugar in the inner space.

12. System according to any one of the claims 7 to 11, further comprising a nitrate supply unit that is operatively connected to the inner space of the pressing apparatus or to the insulation container and that is configured to supply a predetermined amount of nitrate to said inner space or insulation container, and/or further comprising a control unit that is configured to, during operation, control one or more of:
- a rotation speed of the pressing apparatus;
- an amount of alkalioxide supplied to the inner space;
- an amount of sugar supplied to the inner space; and/or
- when dependent on claim 11, an amount of nitrate supplied to the inner space or the insulation container.

13. Protein containing composition obtainable by the method according to any one of the claims 1 to 7.

14. Use of protein containing composition according to claim 13, preferably for feeding ruminant animals, more preferably feeding cows.

15. Mobile unit comprising a system according to any one of the claims 7 to 12.
